# EUROPÄISCHE PATENTSCHRIFT

(11) **EP 0 485 916 B1**
(45) Veröffentlichungstag und Bekanntmachung des Hinweises auf die Patenterteilung: **12.01.1994**
(21) Anmeldenummer: 91119155.9
(22) Anmeldetag: 11.11.1991
(51) Int. Cl.: A01B 45/02, A01B 45/00

(54) **Vertikutiergerät**
Aerating machine
Appareil pour aérer

(30) Priorität: 12.11.1990 DE 4035972
(43) Veröffentlichungstag der Anmeldung: 20.05.1992
(73) Patentinhaber: WOLF-Geräte GmbH Vertriebsgesellschaft KG, D-57518 Betzdorf (DE)
(72) Erfinder: Schütz, Eberhard, W-5244 Daaden (DE)
(74) Vertreter: Koch, Günther, Dipl.-Ing.

(56) Entgegenhaltungen:
- WO-A-89/07882
- DE-A- 3 050 307
- FR-A- 2 186 812
- GB-A- 2 219 720
- US-A- 3 846 963
- US-A- 4 856 264

## Beschreibung

Die Erfindung bezieht sich auf ein Vertikutiergerät mit einer in einem Fahrgestell drehbar gelagerten entgegen der Laufrichtung angetriebenen Messerwalze.

Bei derartigen Vertikutiergeräten wird das von den Vertikutiermessern ausgehobene Vertikutiergut, das aus Rasenfliz und Erdbestandteilen besteht, durch diese Messer ausgeschleudert und auf der Rasenfläche abgelegt, wobei im allgemeinen ein Maschinengehäuse die Ablage im wesentlichen auf die durch das Gehäuse bestimmte Fläche begrenzt. Dieses ausgeworfene Vertikutiergut muß aufgenommen und zur Kompostierung abgelegt werden, was eine sehr mühsame Arbeit darstellt.

Es ist auch bekannt, das Vertikutiergut in einem Fangbehälter aufzunehmen, wie dies bei Rasenmähern üblich ist.

Ein Vertikutiergerät gemäß dem Gattungsbegriff des Patentanspruchs 1 ist aus der WO-A-89/07882 bekannt. Bei diesem bekannten Vertikutiergerät, welches als Rasenmäher ausgebildet ist und demgemäß Schneidmesser und Vertikutiermesser besitzt, ist am oberen Ende des Leitkanals ein nach hinten gekrümmtes Rohrstück angesetzt, das mit einer beweglichen Rutsche versehen sein kann, um das gemähte Gras und das von den Vertikutiermessern ausgeworfene Gut in einen Wagen auszublasen, der mit dem Vertikutiergerät oder einem Traktor gekuppelt werden kann.

Der Erfindung liegt die Aufgabe zugrunde, das Vertikutiergerät mit einem Rillennachsaatgerät zu kombinieren, derart, daß mit dem Vertikutiervorgang in einem Arbeitsgang einen Nachsaat vorgenommen werden kann.

Gelöst wird die gestellte Aufgabe durch die im Kennzeichnungsteil des Patentanspruchs 1 angegebenen Merkmale.

Durch die Erfindung wird erreicht, daß das Saatgut unmittelbar nach Aufreißen der Bodenrillen durch die Vertikutiermesser in diese Bodenrillen eingelegt wird und diese Rillen mit dem darin befindlichen Saatgut durch das aufgelockerte Erdreich des Vertikutiergutes abgedeckt werden.

Durch das Abdecken mit Rasenfilz und Erdreich erhält das Saatgut eine Abdeck schicht, welche das Austrocknen verhindert.

Es sind zwar bereits mit Vertikutiergeräten kombinierte Nachsaatgeräte bekanntgeworden, jedoch wurde hierbei das Saatgut beim Überfahren mit dem Rasenfilz vermischt und erhielt größtenteils keinen direkten Bodenkontakt, sondern es wurde das Saatgut wenigstens zum Teil auf dem ausgehobenen Vertikutiergut abgelegt und vertrocknete. Durch die Erfindung wird erreicht, daß das Saatgut auf dem vom Rasenfilz befreiten Boden in die von den Vertikutiermessern geschaffenen Rillen eingelegt und erst dann mit dem Vertikutiergut abgedeckt wird.

Die GB-A-22 19 720 zeigt eine Rasenbearbeitungsmaschine mit einer Vertikutiermesser aufweisenden, entgegen der Fahrtrichtung angetriebenen Messerwalze. Das von den Vertikutiermessern ausgehobene Vertikutiergut wird durch Leitbleche nach hinten geleitet und es soll dabei zerkleinert bzw. pulverisiert werden, um am rückwärtigen Ende des Gerätes abgelegt zu werden. Eine Nachsaat ist bei diesem bekannten Gerät nicht vorgesehen.

Weitere Ausgestaltungen der Erfindung ergeben sich aus den Unteransprüchen.

Nachstehend wird ein Ausführungsbeispiel der Erfindung anhand der Zeichnung beschrieben. In der Zeichnung zeigen:
Fig. 1 eine schematische Seitenansicht eines mit einem Vertikutiergerät kombinierten Rillennachsaatgerätes;
Fig. 2 eine Grundrißansicht zu Fig. 1;

Das Vertikutiergerät weist ein auf Rädern 12 laufendes Fahrgestell 10 auf, in dem die Welle 14 einer Messerwalze 18 gelagert ist, die aus benachbart zueinander angeordneten zweiarmigen Vertikutiermessern 16 besteht. Der in Bewegungsrichtung vorn liegende Teil der Messerwalze 18 wird von einem gewölbten Leitblech 24 umgeben, das mit seinem Vorderrand 26 dicht über dem Boden und dicht an der Messerwalze 18 liegt und nach hinten seinen Abstand zum Messerwalzenmantel trichterartig vergrößert. An das gewölbte Leitblech schließt ein ebenes Leitblech 28 an, das zusammen mit dem gewölbten Leitblech 24 und einem unteren ebenen Leitblech 30 und Seitenwänden 32 einen schräg nach oben und hinten verlaufenden Leitkanal 22 bildet, in den das von den Vertikutiermessern abgeschleuderte Vertikutiergut gefördert wird.

Das Vertikutiergerät wird durch einen Verbrennungsmotor angetrieben und besitzt einen stufenlos regelbaren Hydromotor für den Fahrantrieb. Die Drehrichtung der Messerwalze 18 ist gegenläufig zu den Laufrädern 12, d.h. die Messerwalze dreht sich in Richtung des Pfeiles P, wenn das Vertikutiergerät mit seinem Führungsgriff 20 in Vorwärtsrichtung, durch die Räder angetrieben, gelenkt wird. Dadurch wird das von den Vertikutiermessern 16 aus der Rasendecke herausgelöste Vertikutiergut nach vorn geschleudert und durch die Leitblechanordnung in den Leitkanal 22 gefördert, in dem es schräg nach hinten und oben verläuft. Die Umlenkung in den Leitkanal 22 erfolgt um etwa 230°.

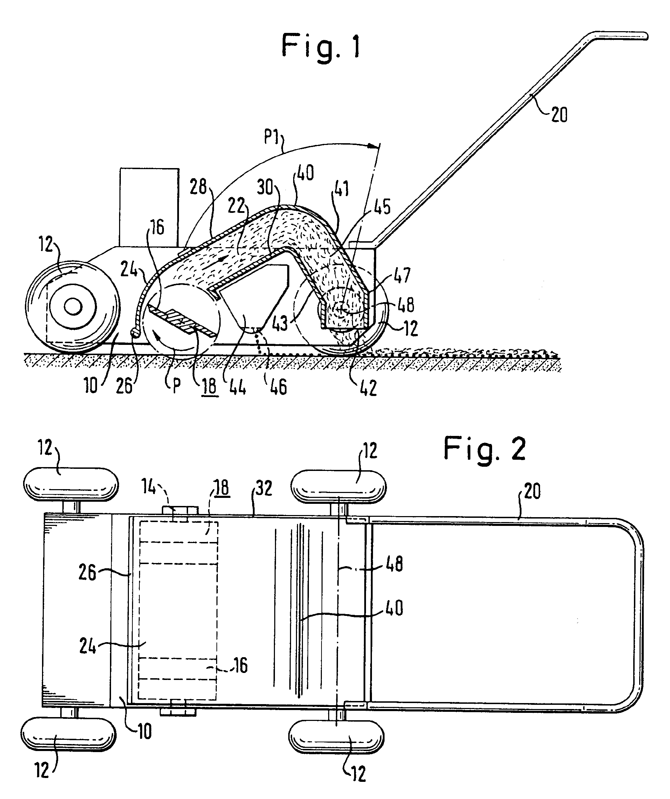

Gemäß Figur 1 und 2 ist das Vertikutiergerät mit einem Rillennachsaatgerät vereinigt, und es schließt an das ebene Leitblech 28 ein gekrümmtes Umlenkblech 40 an, das sich in einem flachen, schräg nach hinten und unten gerichteten Leitblech 41 fortsetzt. Parallel zu dem Leitblech 41 verläuft ein inneres Leitblech 43, das sich in einem Winkel zu dem unteren Leitblech 30 anschließt. Der hierdurch und durch nichtdargestellte Seitenwände gebildete Förderkanal 45 geht über eine Knickstelle 47 in einen vertikalen Endabschnitt über, der in einer dicht über dem Boden endenden Ablagesöffnung 42 endet. Die den Leitkanal und den Förderkanal bildenden Leitbleche 28, 30, 32, 40, 41, 43 sind als Ganzes um eine mit der Radachse der Hinterräder zusammenfallende Achse 48 in Richtung des Pfeiles P1 schwenkbar.

Zwischen der Messerwalze 18 und den Hinterrädern ist ein Saatgutbehälter 44 angeordnet, der trichterförmig nach unten verjüngt ausgebildet ist und in geringem Abstand über dem Boden einen Austrittsschlitz oder Austrittsöffnungen 46 für das Saatgut aufweist.

Das mit einem Rillennachsaatgerät kombinierte Vertikutiergerät gemäß Figur 1 und 2 arbeitet wie folgt:

Hinter der in Richtung des Pfeiles P umlaufenden Messerwalze 18 wird das Saatgut aus dem Saatgutbehälter 44 durch die Austrittslöcher 46 in das geöffnete Saatbett direkt eingebracht. Die Menge des ausgetragenen Saatgutes ist durch einen die Öffnungen 46 in der Größe einstellenden Schieber oder dergleichen einstellbar. Die Keimfähigkeit ist durch den direkten Bodenkontakt gegenüber anderen Verfahren optimal.

Der durch die Messerwalze 18 entnommene Rasenfilz mit Erdanteilen wird durch den Leitkanal 22, 45 hinter dem Saatgutbehälter auf das Saatgut abgelegt. Das Saatgut erhält somit eine Abdeckschicht, welche das Austrocknen verhindert.

## Patentansprüche

1. Vertikutiergerät mit einer in einem Fahrgestell (10) drehbar gelagerten, entgegen der Laufrichtung angetriebenen Messerwalze (18), an deren Auswurfsektor ein sich über die gesamte axiale Länge erstreckender Leitkanal (22) anschließt, der schräg nach hinten und oben geführt ist, der von einem obenen ebenen Leitblech (28), einem unteren ebenen Leitblech (30) und Seitenwänden (32) gebildet wird und der das von der Messerwalze (18) ausgehobene Vertikutiergut einer Abgabeöffnung zuführt, an die eine Weiterverarbeitungsstation anschließt,
gekennzeichnet durch die folgenden Merkmale:
- an die Abgabeöffnung des Leitkanals (22) schließt ein schräg nach hinten und unten verlaufender Förderkanal (45) an;
- das Fahrgestell (10) ist durch auf einer Vorderachse bzw. einer Hinterachse sitzende Räder (12) abgestützt;
- eine Ablageöffnung (42) des Förderkanals (45) befindet sich im Bereich der Hinterachse (48);
- zwischen der Messerwalze (18) und der Ablageöffnung (42) ist ein Saatgutbehälter (44) mit Austrittsöffnungen (46) angeordnet.

2. Vertikutiergerät nach Anspruch 1,
dadurch gekennzeichnet, daß die den Leitkanal (22) und den Förderkanal (45) bildenden Leitbleche (28,30,40,41,43) um eine zur hinteren Radachse (48) koaxiale Achse schwenkbar gelagert sind.

3. Vertikutiergerät nach Anspruch 1,
dadurch gekennzeichnet, daß der Leitkanal (22) außerdem ein gewölbtes Leitblech (24) umfaßt, das den in Bewegungsricntung vorn liegenden Teil der Messerwalze (18) umgibt, mit seinem Vorderrand (26) dicht über dem Boden und dicht an der Messerwalze (18) liegt, und nach hinten seinen Abstand zum Messerwalzenmantel trichterartig vergrößert.

4. Vertikutiergerät nach einem der Ansprüche 1 - 3,
dadurch gekennzeichnet, daß es durch einen Verbrennungsmotor angetrieben wird und einen stufenlos regelbaren Hydromotor für den Fahrantrieb besitzt.

## Claims

1. Aerating apparatus comprising a blade roller (18) which is rotatably mounted in a chassis (10), driven opposite to the running direction and the ejection sector of which is followed by a guide passage (22) which extends over the entire axial length, is led inclined rearwardly and upwardly, is formed by an upper planar guide plate (28), a lower planar guide plate (30) and side walls (32) and which supplies the aerating material lifted out by the blade roller (18) to a discharge opening which is followed by a further processing station,
characterized by the following features:
- the discharge opening of the guide passage (22) is followed by an inclined rearwardly and downwardly extending conveying passage (45);
- the chassis (10) is supported by wheels (12) mounted on a front axle and a rear axle;
- a depositing opening (42) of the conveying passage (45) is located in the region of the rear axle (48);
- between the blade roller (18) and the deposit opening (42) a seed container (44) having outlet openings (46) is arranged.

2. Aerating apparatus according to claim 1,
characterized in that the guide plates (28, 30, 40, 41, 43) forming the guide passage (22) and the conveying passage (45) are pivotally mounted about an axis coaxial with the rear wheel axle (48).

3. Aerating apparatus according to claim 1,
characterized in that the guide passage (22) additionally includes an arcuate guide plate (24) which surrounds the portion of the blade roller (18) lying at the front in the movement direction, lies with its front edge (26) closely above the ground and closely adjacent the blade roller (18), and increases its distance from the blade roller surface rearwardly in funnel-like manner.

4. Aerating apparatus according to any one of claims 1 to 3,
characterized in that it is driven by an internal-combustion engine and has an infinitely variably controllable hydromotor for the travelling drive.

## Revendications

1. Appareil pour aérer comprenant un cylindre porte-couteaux (18) monté de manière rotative dans un bâti (10) et entraîné dans le sens inverse de la marche, dans la zone d'éjection duquel se raccorde un canal de guidage (22) s'étendant sur toute la longueur axiale qui est guidé en biais vers l'arrière et vers le haut, qui est formé par une tôle de guidage (28) supérieure plane, par une tôle de guidage (30) inférieure plane et par des parois latérales (32) et qui amène la matière extraite par le cylindre porte-couteaux (18) à une ouverture de décharge à laquelle se raccorde une station de traitement ultérieur, caractérisé par le fait que:
- un canal de transport (45) s'étendant en biais vers l'arrière et vers le bas se raccorde à l'orifice de décharge du canal de guidage (22);
- le bâti (10) prend appui sur des roues (12) montées sur un essieu avant et un essieu arrière;
- un orifice de décharge (42) du canal de transport (45) se trouve dans la zone de l'essieu arrière (48);
- entre le cylindre porte-couteaux (18) et l'orifice de décharge (42) est disposé un réservoir de semences (44) muni d'orifices de sortie (46).

2. Appareil pour aérer selon la revendication 1, caractérisé en ce que les tôles de guidage (28, 30, 40, 41, 43) formant le canal de guidage (22) et le canal de transport (45) sont montées de manière pivotante autour d'un axe coaxial par rapport à l'essieu arrière des roues (48).

3. Appareil pour aérer selon la revendication 1, caractérisé en ce que le canal de guidage (22) comprend en outre une tôle de guidage (24) courbée qui entoure la partie du cylindre porte-couteaux (18) située à l'avant par rapport au sens de la marche, qui est située avec son bord avant (26) juste au-dessus du sol et tout contre le cylindre porte-couteaux (18) et dont l'écart par rapport à l'enveloppe du cylindre porte-couteaux s'élargit vers l'arrière en forme d'entonnoir.

4. Appareil pour aérer selon l'une des revendications 1 à 3, caractérisé en ce qu'il est entraîné par un moteur à combustion interne et comporte un moteur hydraulique réglable en continu pour l'entraînement en déplacement.
